# EUROPEAN PATENT APPLICATION

(11) **EP 4 470 643 A2**
(43) Date of publication of application: **04.12.2024**
(21) Application number: 24175695.6
(22) Date of filing: 14.05.2024
(51) Int. Cl.: A63F 13/79, A63F 13/42, A63F 13/22, A63F 13/98, A63F 13/73

(54) **SYSTEMS, APPARATUS AND METHODS FOR DEVICE PERSONALISATION**

(30) Priority: 01.06.2023 GB 202308208
(71) Applicant: Sony Interactive Entertainment Inc., Tokyo 108-0075 (JP)
(72) Inventor: GREEN, Lawrence, London, W1F 7LP (GB); MONTI, Maria, London, W1F 7LP (GB); RUDKO, Pavel, London, W1F 7LP (GB)
(74) Representative: D Young & Co LLP

(57) **Abstract**

A system comprises a portable user device configured to store user profile information associated with a user, and an entertainment system comprising a video game processing device and one or more input devices, the portable user device being configured to communicate at least some of the user profile information to a second device via near-field communication, wherein the second device is one or more selected from the video game processing device and one or more of the input devices, wherein the video game processing device is configured to perform one or more processing operations in dependence on at least some of the user profile information received from the portable user device.

## Description

### Field of the Disclosure

The present disclosure relates to the field of processing data. In particular, the present disclosure relates to systems, apparatus and methods for personalisation of an entertainment system.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

It is generally desirable to allow users to personalise computing devices for enhancing their experience of using such devices. This may include inputting information for specifying various settings of the device. Such settings may generally be stored to avoid users having to repeatedly enter their details each time the device is used. However, different users typically have different preferences. In cases where a same device is used by a number of users and/or where a same user typically uses a number of respective devices, device personalisation can be a tedious and potentially time consuming task. It is desirable to allow personalisation of a given device to be achieved quickly and with reduced cognitive load for the user.

It is in this context that the present disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram illustrating a system;
Figure 3 is a schematic diagram illustrating an example of a system comprising a smartphone device and a video game processing device operated using a handheld video game controller;
Figures 4a and 4b are schematic diagrams illustrating examples of user profile information comprising control input mappings;
Figure 5 is a schematic diagram illustrating an example of a graphical user interface for inputting a control input mapping; and
Figure 6 is a schematic flowchart illustrating a method.

Embodiments of the invention will now be described, by way of example only, with reference to the accompanying drawings, in which:

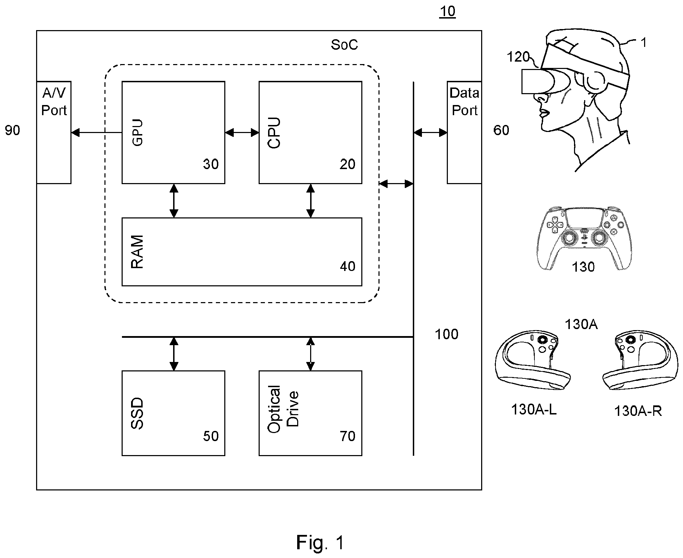

Figure 1 schematically illustrates an example entertainment device such as the Sony^{®} PlayStation 5^{®} (PS5) entertainment device.

The entertainment device 10 comprises a central processor (CPU) 20. This may be a single or multi core processor, for example comprising eight cores as in the PS5. The entertainment device also comprises a graphical processing unit (GPU) 30. The GPU can be physically separate to the CPU, or integrated with the CPU as a system on a chip (SoC) as in the PS5.

The entertainment device also comprises RAM 40, and may either have separate a random access memory (RAM) for each of the CPU and GPU, or shared RAM as shown in Figure 1. Both the CPU and the GPU thus have access to RAM. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit and/or receive data via one or more data ports 60, such as a universal serial bus (USB) port, Ethernet^{®} port, Wi-Fi^{®} port, Bluetooth^{®} port, Wi-Fi ^{®} port or similar, as appropriate. It may also optionally receive data via an optical drive 70.

Audio/visual outputs from the entertainment device are typically provided through one or more A/V ports 90, such as an HDMI port, or through one or more of the wired or wireless data ports 60.

An example of a device for displaying images output by the entertainment system is a head mounted display `HMD' 120, such as the PlayStation^{®} VR 2 'PSVR2', worn by a user 1.

Where components are not integrated, they may be connected as appropriate either by a dedicated data link or via a bus 100.

Interaction with the entertainment device is typically provided using one or more input devices. Input devices such as handheld controllers (130, 130A), in particular the DualSense^{®} controller 130 in the case of the PS5, and/or one or more VR controllers 130A-L, 130A-R in the case of the HMD.

Figure 1 therefore provides an example of an entertainment device suitable for performing processing for executing interactive content and generating video images and audio for output to a user. The entertainment device can be suitable for performing processing for executing an instance of an interactive gaming application and generating images and audio for output to a user via one or more display devices. The entertainment device may for example generate images for display by a display device such as a television and/or the head mounted display unit 120.

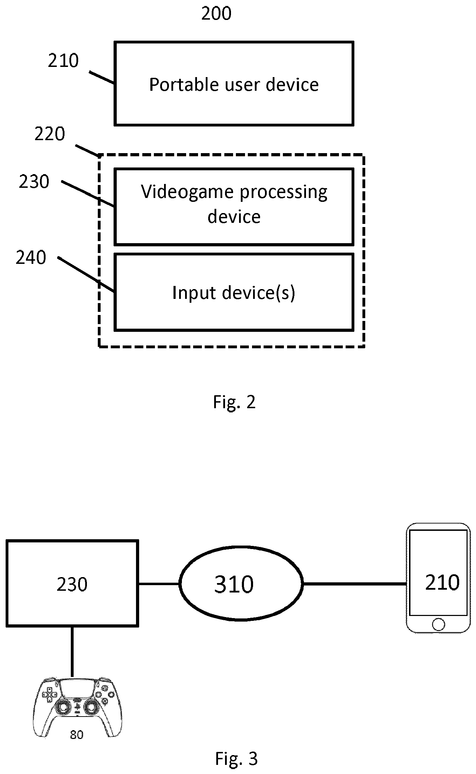

Figure 2 schematically illustrates a system 200 in accordance with embodiments of the disclosure. The system 200 comprises a portable user device 210 and an entertainment system 220. The entertainment system comprises a video game processing device 230 and one or more input devices 240.

In some examples, the entertainment system 220 may comprise a video game processing device 230, such as the entertainment device described with respect to Figure 1, and one or more input devices 240 such as an input device typically used with personal computing devices and/or video game consoles. For example, the entertainment system 220 may comprise one or more input devices such as a keyboard, mouse, media controller (for example in the form of a remote control), handheld video game controller (such as the DualShock 4 ^{®}, DualSense ^{®} and/or VR controllers 130A-L, 130A-R) and/or head-mountable display (such as the PlayStation^{®} VR 2 'PSVR2'). Other peripheral input devices may similarly be considered.

The entertainment system 220 comprises the video game processing device 230 and the one or more input devices 240 so that the video game processing device 230 is operable to perform processing operations, such as processing one or more video games, in accordance with input signals received from one or more of the input devices 240. In some embodiments of the disclosure, the entertainment system 220 may comprise a video game console (as an example of the video game processing device 230) and handheld video game controller (as an example of the one or more input devices 240). Such an example is discussed later with respect to Figure 3.

Hence more generally, the entertainment system 220 comprises one or more input devices which can be operated by a user. Input signals generated by an input device can be communicated for use by the video game processing device 230 for performing processing operations. The or each input device may be operable to communicate input signals to the video game processing device via one or more of a wired and/or wireless communication. For example, a wired connection (e.g. USB) between an input device (e.g. handheld video game controller) and the video game processing device may be used for communication of input signals to the video game processing device. Alternatively or in addition, a wireless communication (e.g. Bluetooth^{®}) between the input device and the video game processing device may be used for communication of input signals to the video game processing device. Hence, the entertainment system 220 is capable of being used by a user for playing a video game by the user operating one or more of the input devices.

The portable user device 210 may be one of a smartphone device, smartwatch device and tablet computing device associated with a user and which stores user profile information associated with the user. The portable user device 210 may comprise any suitable storage circuitry (e.g. non-volatile memory such as flash memory) for storing the user profile information.

As discussed in more detail later, the user profile information may have been manually input by the user to the portable device 210 and/or may have been received by the portable user device 210 (via one or more a wired or wireless communication) from one or more other devices. In particular, in some examples at least some of the user profile information that is stored by the portable user device may have been obtained from another user device that has been previously used by the user.

In some embodiments of the disclosure, at least some of the user profile information stored by the portable user device 210 may have been received by the portable user device from one or more other processing devices associated with the user. The one or more other processing devices associated with the user may comprise a video game console previously used by the user, such as a video game console located at the user's home location or another personal computing device located at the user's home location. When using a video game console (such as a video game console located at the user's home location), the user may specify various information (e.g. various settings which are preferred by the user). During or after use of such a video game console, at least some of the information can be communicated to the portable user device and stored as part of the user profile information. For example, both the portable user device and the video game console may be near-field communication (NFC) enabled and the portable user device may be moved to a position within an NFC range of the video game console so that information can be communicated to the portable user device via NFC. In some examples, a wired connection (e.g. USB) between the portable user device and the video game console may be used, or another type of wireless communication (e.g. Bluetooth^{®} and/or WiFi^{®}) may be used for providing the information to the portable user device.

Alternatively or in addition, in some embodiments of the disclosure at least some of the user profile information stored by the portable user device may have been input to the portable user device by the user. For example, the portable user device (e.g. smartphone device) may comprise a display and inputs (e.g. touch sensitive screen and/or physical buttons) for allowing the user to input information to the portable user device. Hence, the user may manually input at least some of the user profile information directly to the portable user device. As explained in more detail later, in some cases the portable user device may be configured to run a software application, and the user may manually input information using one or more graphical user interfaces associated with the software application.

Hence more generally, the user profile information that is stored by the portable user device can be input to the portable user device and/or acquired from one or more other devices, and the user profile information may comprise various information associated with the user. Referring to the system of Figure 2, the portable user device 210 is configured to communicate at least some of the stored user profile information to a second device via near-field communication (NFC), in which the second device is one or more selected from the video game processing device 230 and one or more of the input devices 240.

The portable user device 210 is a near-field communication (NFC) enabled device comprising an NFC chip and is thus operable to communicate at least some of the user profile information stored by the portable user device 210 via NFC when positioned within a near-field communication range of another NFC enabled device. In the system of Figure 2, at least one of the video game processing device 230 and the input device(s) 240 is an NFC enabled device comprising an NFC chip. Hence, NFC between the portable user device and at least one NFC enabled device of the entertainment system 220 can be established and used for communication of at least some of the user profile information for use by the entertainment system 220. NFC communication techniques are generally known and are not discussed in detail. Any suitable NFC protocol may be used for the communication between the portable user device and the second device. The term second device is used herein to refer to a device that is part of the entertainment system and with which the portable user device communicates using NFC to provide at least some of the user profile information to the entertainment system.

For example, the input device 204 may be a handheld controller (such as the DualSense^{®}) and may comprise an NFC chip for allowing the input device 204 to receive at least some of the user profile information from the portable user device using NFC when both devices are within a suitable distance of each other for establishing NFC. The location of the NFC chip within the body of the handheld controller may be any suitable location. For example, the NFC chip may be positioned beneath a top surface of a middle portion of the body of the handheld controller between a left handle portion and a right handle portion. In some examples, the input device may comprise one or more markings on an external surface for indicating a position (or an approximate) position of the NFC chip. Similarly, the video game processing device 230 may comprise an NFC chip for allowing the video game processing device 230 to receive at least some of the user profile information from the portable user device using NFC when both devices are within a suitable distance of each other for establishing NFC. The NFC chip may be positioned beneath a top surface of a housing for the video game processing device 230 so that the portable user device can be tapped on (or positioned adjacent to and within an NFC range) a part of the housing. The video game processing device 230 may comprise one or more markings on an external surface for indicating a position (or an approximate) position of the NFC chip for assisting the user in establishing a location with respect to the video game processing device at which the position the portable user device.

In some embodiments of the disclosure, the entertainment system 220 may comprise a single NFC enabled device. For example, the video game processing device 230 may be the only NFC enabled device for the entertainment system 220. Hence, both the portable user device and the video game processing device may be NFC enabled devices each comprising an NFC chip. In this case, the user may move the portable device to a position that is within an NFC communication range (e.g. within 15 cm) of the video game processing device to enable sending of user profile information to the video game processing device 230. In other examples, one of the one or more input devices 240 may be an NFC enabled device. In this case, the user may move the portable device to within an NFC communication range of an input device to enable sending of user profile information to the input device which then communicates the user profile information to the video game processing device 230 via one or more of a wired (e.g. USB) and wireless (e.g. Bluetooth^{®}) communication. Whilst the above discussion refers to the user moving the portable user device to a position proximate to (i.e. within a predetermined distance of) another NFC enabled device to establish NFC communication between the portable user device and the another NFC enabled device, in some cases the another NFC enabled device may be moved by the user to a position proximate to the portable user device to establish NFC communication between the portable user device and the another NFC enabled device, and/or NFC communication may be established by the user moving both the portable user device and the another NFC enabled device towards each other.

For example, the portable user device may be a smartphone device and an input device 240 such as a handheld video game controller may be provided. In some examples, the user may hold the smartphone device in their hand and move the smartphone device to a position within an NFC range of the handheld video game controller. Alternatively or in addition, the user may hold the handheld video game controller and move the handheld video game controller to a position within an NFC range of the smartphone device. In some examples, the user may be holding the handheld video game controller (and optionally may be using the controller for progressing interactive content on the video game processing device, such as a video game) and the portable user device may be being carried in a compartment (e.g. pocket) of a garment (e.g. trousers or shirt) being worn by the user. The user's hand(s) holding the video game controller can thus be moved to a position proximate to the compartment to establish NFC communication between the devices and thereby allow sharing of at least some of the user profile information to the handheld video game controller (or more generally an input device being held by at least one of the user's hands). Such techniques may be particularly useful in cases in which a user is already participating in a session of an interactive application (e.g. video game) and desires to allow user profile information on the portable user device to be shared with the video game processing device without interrupting their session.

In some embodiments of the disclosure, the entertainment system 220 may comprise a plurality of NFC enabled devices. As such, the user may be able to choose an NFC enabled device of the entertainment system to be used for receiving the user profile information from the portable user device. In particular, in some examples both the video game processing device 230 and an input device 240 may be NFC enabled (i.e. each comprising an NFC chip) and a user may be able to choose whichever is more convenient at any given point in time.

Hence more generally, the portable user device is configured to communicate at least some of the user profile information to a second device via NFC, and the second device is one or more selected from the video game processing device and one or more of the input devices.

The user can thus positon their portable user device within a predetermined range (e.g. up to 15 cm) of the second device associated with the entertainment system to enable communication of at least some of the user profile information to the second device using NFC so that user profile information can be easily and quickly provided to the video game processing device (either directly or indirectly via one or more input devices).

Hence, rather than requiring the user to manually input their information, by potentially using one or more menus and so on, the portable user device and the second device can be brought into range of each other (e.g. by moving the portable user device to a position within an NFC range of the second device, or vice versa, or a combination thereof) and at least some of the user profile information stored by the portable device can be automatically sent to the second device for quickly allowing user profile information to be made available for used by the entertainment system.

Hence, the portable user device can be used for storing the user profile information and can potentially be used a number of times with a number of respective entertainment systems to allow the recipient devices to be quickly configured using at least some of the user profile information and with minimal user burden. Moreover, the portable user device can be used as a single storage location for storing user profile information for the user and can be quickly and easily used for allowing a device to be personalised by using NFC to provide the user profile information. Hence, rather than having to manually specify their user profile information (e.g. desired settings) a number of times (e.g. each time a device is used), the user profile information may potentially be input once and stored by the portable user device for use when desired by the user.

For example, a user may visit a friend's house and use an entertainment system (e.g. game console or personal computing device), and the techniques of the present disclosure allow user profile information to be quickly made available for use by the entertainment system with minimal user burden. In some cases, such as an arena used for eSports^{®} or another similar setting which comprises a number of respective entertainment systems, then a user may use a number of respective devices at various times, and the portable user device can potentially be used to quickly make the user profile information available to an entertainment system via NFC when desired to be used by the user.

Hence, the entertainment system 220 is operable to receive at least some of the user profile information from the portable user device, and the video game processing device is configured to perform one or more processing operations in dependence on at least some of the user profile information received from the portable user device. One or more processing operations performed by the video game processing device can thus be performed in a manner that can be personalised for the user by using the received user profile information. For example, user profile information indicative of one or more settings that have been previously specified by the user can be provided to the entertainment system so that one or more processing operations can be performed in accordance with one or more of the settings.

The user profile information may comprise various information associated with a user such as one or more settings (e.g. image display settings and/or audio settings and/or controller settings) and/or personal information (e.g. one or more login credentials) and/or video game asset information. At least some of the user profile information may have been received from a video game console previously used by the user and may comprise one or more settings that have been specified by the user when previously using that video game console and/or one or more video game assets that have been unlocked when previously using that video game console.

Figure 3 schematically illustrates an example configuration for the system 200. It will be appreciated that Figure 3 is a schematic representation not drawn to scale. In the example of Figure 3, the video game processing device 230 (e.g. a video game console such as the Sony^{®} PlayStation^{®} 5) receives input signals from an input device 80 (shown in this example as handheld video game controller) via one or more of a wired and a wireless communication for performing processing operations in accordance with the received input signals. The portable user device 210 in this example is shown as a smartphone device which communicates via a near-field communication channel 310 with the video game processing device 230.

Hence, in this example user profile information stored by the user's smartphone device can be quickly and easily (e.g. without requiring the user to perform time consuming operations such as device-to-device pairing) provided to the video game processing device 230 so that the video game processing device can be configured accordingly for the user by using the user profile information. Of course, in other examples the portable user device may be another type of portable device such as a smartwatch device or tablet computing device. Whilst Figure 3 shows an example in which the portable user device and the video game processing device communicate via the NFC channel 310, in other examples the portable user device may be able to communicate with one or both of the input device 80 and the video game processing device 230 via the NFC channel 310.

In some embodiments of the disclosure, the user profile information is indicative of one or more user specified settings. The one or more user specified settings may comprise one or more from the list consisting of: one or more display settings; one or more audio settings; one or more graphical user interface settings; and one or more input device settings (e.g. control input mappings). Therefore, user profile information indicative of one or more settings can be received via near-field communication so that one or more current settings (e.g. current display settings) specified at the video game processing device 230 can be updated to use one or more settings indicated by the user profile information.

Hence, the portable user device may store user profile information indicative of one or more settings that have been previously specified by the user (e.g. by being input to the portable user device or by being used on another device associated with the user). One or more settings stored by the video game processing device 230 can be updated in response to receiving the user profile information so that one or more of the settings associated with the user are used instead of using one or more of the settings (e.g. default settings) stored by the video game processing device 230. Therefore, processing operations such as image processing operations, audio processing operations, graphical user interface operations and/or control input processing operations can be personalised for the user by using settings that have been obtained from the user's portable device via near-field communication.

Prior to or during playing of a video game using the entertainment system 220, the user may position their portable device with respect to one of an input device and the video game processing device to allow user profile information indicating one or more of the user's settings to be communicated and used to automatically update one or more current settings being used by the processing by the entertainment system 220. Hence in a case where a user may have started a session for a video game and subsequently realised that one or more settings should be changed, rather than having to pause the session (which may not always be possible for some video games) and access one or more menus, the techniques of the present disclosure can potentially allow quick and easy transfer of user profile information indicative of one or more settings previously specified by the user for use by the video game processing device by the user potentially only positioning their portable device within an NFC range of one of an input device and the video game processing device. Optionally, the user may be required to perform one or more input operations with respect to the portable user device (e.g. such as entering a code for unlocking the portable user device or just waking a screen associated with the portable user device) to enable communication of at least some of the user profile information.

In some embodiments of the disclosure, the user profile information is indicative of one or more control input mappings specified by the user for one or more input devices. The user profile information may specify a control input mapping for a first input device which specifies a mapping between one or more inputs (e.g. operating members such as buttons, control sticks, triggers, touchpads and so on) of the first input device and one or more functions. For example, the user profile information may specify a control input mapping for a handheld video game controller (e.g. the DualSense^{®} controller) so as to map at least some of the inputs to respective functions. Hence, user profile information indicative of a control input mapping for an input device can be communicated from the portable user device via NFC and used by the video game processing device for mapping control input signals received from one or more of the input devices to functions. In this way, a control input mapping stored by the portable user device can be quickly and easily provided to the video game processing device and used for mapping control input signals to achieve device personalisation for the user.

Conventional techniques typically require users to manually input their desired control input mappings using one or more menus. This can be a tedious and time consuming task, and in particular with increasingly sophisticated video game controllers with a number of inputs. In the techniques of the present disclosure a controller input mapping that has been previously specified by the user can be provided to the video game processing device 230 by the portable user device 210 using NFC so that the received controller input mapping can be quickly and easily provided for being used in place of another mapping already stored by the video game processing device (e.g. a default mapping or a mapping that has been previously set by a previous user).

Hence, in some embodiments of the disclosure, in response to receiving user profile information indicative of at least one control input mapping, the video game processing device is configured to perform one or more processing operations using the at least one control input mapping instead of one or more other control input mappings (e.g. one or more default mappings) stored by the video game processing device.

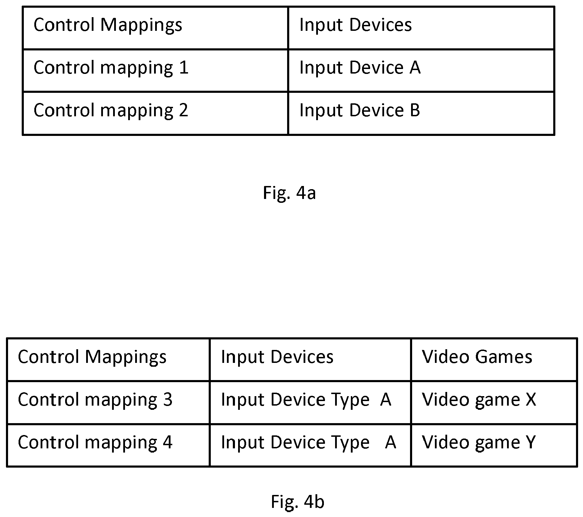

Figure 4a schematically illustrates an example of user profile information comprising control input mappings for respective input devices. In the example of Figure 4a, the user profile information comprises two respective control input mappings for two respective input devices. In some examples, the user profile information may comprise a single respective control input mapping for a respective input device or may comprise a plurality of respective control input mappings for a plurality of respective input devices.

As shown in Figure 4a, the user profile information comprises a first control input mapping for a first input device (mapping 1 to be used for device A) and a second control input mapping for a second input device (mapping 2 to be used for device B). The first control input mapping specifies a mapping between inputs of the first input device and functions, and similarly the second control input mapping specifies a mapping between inputs of the second input device and functions. For example, the input device A may correspond to an input device such as a two-handed video game controller (e.g. the DualSense^{®}) and the mapping 1 may specify a mapping for some or all of the inputs associated with that input device. The input device B may correspond to another input device, such as an HMD, or a single handed controller (e.g. such as the VR controller 130A-L or 130A-R, or a conventional TV remote control) and the mapping B may specify a mapping for some or all of the inputs associated with that input device.

Hence more generally, the user profile information may specify one or more control input mappings for one or more input devices and such information can be provided to the entertainment system so that one or more of the user's previously specified control input mappings can be automatically used.

In some examples, the portable user device can be configured to send the user profile information to the second device (i.e. one or more selected from the video game processing device and one or more of the input devices) and a decision regarding whether to use a respective control input mapping can be made at the video game processing device. For example, the received user profile information may be evaluated with respect to information identifying one or more of the input devices 240 that are currently available (e.g. currently powered on) to detect whether the user profile information comprises a control input mapping for use with one of the input devices 240. Hence, in response to detecting that the user profile information comprises a control input mapping for use with one of the input devices 240, the control input mapping can be used at the video game processing device. For example, a respective control input mapping may be associated with metadata for indicating an input device for the respective control input mapping. An example of this may be metadata indicating a name such as "DualSense", "PlayStation VR", "PlayStation Move" and so on. Hence, metadata associated with a respective control input mapping may be used to determine whether the respective control input mapping corresponds to an input device that is being used with the entertainment system. However, in response to detecting that the user profile information does not comprise a control input mapping for use with one of the input devices being used with the entertainment system, then a control input mapping already stored by the video game processing device (e.g. a default control input mapping) may be used. Alternatively, in some cases information may be exchanged between the portable user device (and the second device using bi-directional NFC techniques) prior to communicating the user profile information so that a decision as to which (if any) of the control input mappings is to be sent can be made at the portable user device.

In some embodiments of the disclosure, the user profile information is indicative of two or more different control input mappings specified by the user for a same input device, each of the two or more different control input mappings being associated with a different video game. Although input devices such as video game controllers are typically designed with an input layout (e.g. button layout) intended to be suited for a variety of video games, some users may desire a different mapping for an input device depending on a video game. Hence, a user may specify two or more different control input mappings for a same input device to be used for two or more different video games. Figure 4b schematically illustrates an example of user profile information comprising two different control mappings associated with two different video games. In the example of Figure 4b, both control mappings (mapping 3 and 4) specify a mapping for a same input device (device A discussed above with respect to Figure 4a) and the mapping 3 is to be used for the video game X, whereas the mapping 4 is to be used for the video game Y. Hence, the user profile information can be received by the video game processing device 230 and a decision as to which of the mappings to use can be made depending on whether the video game X or video game Y is to be played (or is currently being played). For example, metadata associated with the control mappings 3 and 4 may specify one or more names associated with a video game which can be used for determining whether the metadata corresponds to a video game at the video game processing device. Hence more generally, in some cases the user profile information may be indicative of a plurality of different control input mappings that have been specified in advance by the user for a same input device, in which each of the plurality of different control input mappings is associated with a different video game.

In some embodiments of the disclosure, the user profile information is indicative of one or more user specified settings comprising one or more from the list consisting of: one or more display settings; one or more audio settings; and one or more graphical user interface settings. In some cases, user specified display settings, user specified audio settings and/or user specified graphical user interface settings may be indicated by the user profile information. The one or more display settings may comprise, for example, an image brightness setting and/or an image contrast setting and/or a frame rate setting. The one or more audio settings may comprise a volume setting, bass setting and/or treble setting. The one or more graphical user interface settings may comprise a font type setting, font size setting and/or a setting specifying a layout for one or more elements of a graphical user interface. In response to receiving the user profile information, one or more setting stored by the video game processing device (which may be default settings or settings set previously by another user) can be updated in dependence on the user profile information so that one or more display settings and/or one or more audio settings and/or one or more graphical user interface settings indicated by the user profile information can be used instead. For example, a positional layout of a respective elements in a graphical user interface can be personalised for the user according to one or more graphical user interface settings indicated by the received user profile information.

Hence more generally, the portable user device may be used to store a number of personalised settings for the user such that the portable user device can be used as a single storage location for storing the user's desired settings. Using a single tap of the portable user device with the second device of the entertainment system (or more generally a movement that results in the portable user device and the second device establishing near field communication), user profile information indicative of a number of personalised settings for the user can be provided for allowing a number of settings at the video game processing device to be updated and thereby automatically customised for the user.

In some embodiments of the disclosure, the user profile information is indicative of one or more login credentials for accessing an account associated with a software application on the video game processing device. The user profile information may comprise one or more unique identifiers for enabling access to the account, such as one or more passwords and/or one or more usernames. Hence, a movement that results in the portable user device and the second device establishing near field communication may be used to allow quick and easy login to the account. In addition, in some scenarios in which multiple users simultaneously view a same display image (either by being located in front of a same physical display device or a same display image being shared for viewing by one or more other remote users), there may be privacy concerns associated with entering sensitive information (e.g. entering a password using an image-based keyboard). More generally, there may be privacy concerns associated with entering sensitive information via inputs with respect to a display image. By using the portable device, user profile information indicative of one or more login credentials can be provided via NFC for potentially allowing the user to login with improved safety. Hence, in some embodiments of the disclosure, in response to receiving user profile information indicative of one or more login credentials for accessing the account associated with the software application on the video game processing device, the video game processing device is configured to automatically log-in to the account using one or more of the login credentials.

In response to receiving user profile information from the portable user device which is indicative of one or more login credentials for accessing an account associated with a software application on the video game processing device, the video game processing device can be configured to log into the account using one or more of the login credentials. The user may subsequently be able to log out of the account by providing one or more inputs via the input device 240. Alternatively or in addition, in some examples a second NFC tap using the portable user device may be used for initiating a log-out operation with respect to the account. Alternatively or in addition, when establishing the NFC communication, in addition to communication of the user profile information, one or more wireless pairing credentials (e.g. Bluetooth^{®} pairing credentials) may be exchanged so that a longer range (longer in range than NFC) communication can subsequently be established. In some examples, a wireless network (e.g. Personal Area Network) may subsequently be established between the portable user device and one or more devices of the entertainment system (e.g. the video game processing device) and in response to a detection (e.g. by the video game processing device) that the portable user device is no longer connected via the wireless network, an auto log-out operation can be performed with respect to the account. For example, the wireless network that is subsequently established may use the Bluetooth^{®} communication protocol, and in the absence of a detection of a beacon identifier associated with the portable user device indicating that the user is no longer using the entertainment system, then the auto log-out may be initiated.

In some embodiments of the disclosure, the video game processing device can be configured to log into the account using one or more of the login credentials and specify a predetermined time-limit upon expiry of which an auto log-out operation is performed with respect to the account. For example, a predetermined time duration and/or an end time may be specified at the time of the initial log-in operation so that upon reaching one of the predetermined time duration and/or the end time the user's account will automatically be logged out by the video game processing device.

In some embodiments of the disclosure, the portable user device is configured to store a software application comprising the user profile information. In particular, in some embodiments of the disclosure, the software application stored by the portable user device may correspond to a companion software application for another software application installed on the video game processing device. The software application stored by the portable user device 210 may correspond to a companion application for a native software application on the video game processing device. For example, the software application stored by the portable user device 210 may correspond to the PlayStation^{®} App for the PlayStation^{®} gaming platform, and the video game processing device may be a video game console that supports an operating system for the PlayStation^{®} gaming platform.

More generally, the portable user device may store a software application used for storing the user profile information. Using the software application, the user can provide user inputs to input one or more attributes for the user profile information and/or specify sharing settings for portions of the user profile information.

In some embodiments of the disclosure, the portable user device comprises a display to display one or more graphical user interfaces associated with the software application for receiving one or more user inputs indicative of at least some of the user profile information associated with the user. Using a display on the portable user device, one or more graphical user interfaces can be displayed for enabling the user to provide inputs for specifying attributes to be stored for the user as the user profile information. Hence, the user can build their user profile information by inputting information using one or more graphical user interfaces.

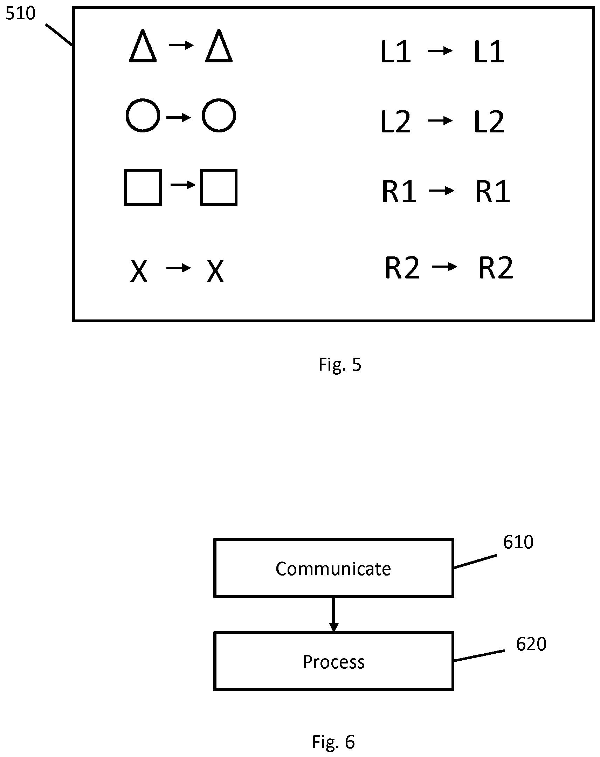

In some examples, a graphical user interface associated with an input device (e.g. a handheld video game controller such as the DualSense^{®}) may be presented with respective fields corresponding to respective inputs of the input device so that the user can specify a control input mapping for the input device. Figure 5 schematically illustrates an example of a graphical user interface 510 capable of being used for specifying a customised control input mapping for a predetermined input device. The graphical user interface 510 shows a default mapping for a PlayStation^{®} DualSense^{®} controller prior to the user specifying their personalised control input mapping. One or more user inputs can be provided (e.g. using a touch screen of the portable user device) with respect to the graphical user interface 510 to modify the default mapping so that a function associated with a respective input (e.g. a function associated with the button L1) is mapped to another respective input (e.g. instead mapped to the button R1 or X for example). Hence more generally, a graphical user interface may be displayed for allowing the user to specify a customised control input mapping for an input device. The customised control input mapping can thus be stored as part of the user profile information. Whilst not shown in Figure 5, the graphical user interface 510 (or another graphical user interface) may also be used for remapping inputs such as left, right, up and down direction buttons (e.g. such as buttons associated with a conventional D-pad) as well as left and right control sticks on a controller such as those of the controller 80 shown in Figure 3.

Figure 5 thus represents an example of a graphical user interface capable of being used for specifying a customised control input mapping for a respective predetermined input device. The software application may have a plurality of respective graphical user interfaces each associated with a different predetermined input device. For example, a first graphical user interface may be associated with a first predetermined input device (such as the PlayStation^{®} DualSense^{®}), and a second graphical user interface may be associated with a second predetermined input device (such as the PlayStation Move^{®}).

In some embodiments of the disclosure, the portable user device is configured to display one or more graphical user interfaces associated with the software application for receiving one or more selection inputs indicative of one or more selected portions of the user profile information to be made available for being communicated by the portable user device using near field communication. Hence, a graphical user interface can be provided for allowing the user to select parts of the user profile information which are to be able to be shared via near field communication. For example, the user may desire that certain information included within the user profile information, such as sensitive information, is not to be shared whilst other information such as one or more respective control input mappings is to be made available for being shared when near field communication is established with the second device of the entertainment system. For example, a graphical user interface may comprise one or more toggle buttons (or other similar GUI elements) for allowing the user to specify a sharing status (e.g. shared / not shared) for a given portion of the user profile information. Respective toggle buttons may be associated with respective portions of the user profile information for allowing a sharing status to be set for the respective portions of the user profile information. Therefore, the user can potentially use the software application to build a user profile and can be afforded control over which portions of the user profile information can be communicated via NFC.

In some embodiments of the disclosure, the user profile information comprises video game asset information for enabling access to one or more video game assets associated with one or more video games, and wherein the portable device is configured to communicate at least some of the video game asset information to the second device via near field communication to enable access to one or more of the video game assets for one or more video games processed by the video game processing device. Information for a video game asset such as a respective in-game item may be provided to the second device via near field communication to allow the in-game item to be used by the video game processing device. A video game asset such as an in-game weapon or character, for example, which is otherwise not currently available to the video game processing device may thus be made available for use in a video game being processed by the video game processing device. For example, some video game assets may require completion of one or more tasks in order to unlock the video games asset. The user associated with the portable user device may have previously unlocked or purchased a video game asset. Information associated with such a video game asset can be stored as part of the user profile information and communicated to the second device via near field communication so that the information can be used to enable access to the video game asset in a video game played using the video game processing device.

In some embodiments of the disclosure, the portable user device is configured to communicate at least some of the video game asset information to the second device in response to selection input by the user of a temporary share mode to enable a time-limited access to one or more of the video game assets for one or more of the video games processed by the video game processing device. A temporary share mode may be provided for allowing the video game asset information to be used by the video game processing device for a limited period of time. For example, the video game asset information associated with one or more video games assets may further comprise time information indicative of one or more of: a predetermined time duration; and an end time at which access to one or more of the video games assets is to be stopped. For example, the predetermined time duration may correspond to a duration Z minutes, where Z may be a value in the range 1 to 1440. The predetermined time duration may be set so as to start running from the point in time at which the video game asset information is sent to the second device, or may instead be set so as to start running from a point in time at which the video game asset information is first used by the video game processing device. The end time may be specified as a certain point in time with respect to a 24 hour clock.

The temporary share mode may be selected using one or more graphical user interfaces associated with the software application discussed previously. For example, alternatively or in addition to being able to specify a sharing status (e.g. sharing on / sharing off) for a video game asset, a temporary share mode may be capable of being specified for one or more video game assets so that sharing of the video game asset can be enabled for a limited time. For example, the user may provide a user input for specifying one or more of the time duration and/or the end time discussed above for allowing the user to control a time for which the video game asset can be used by the video game processing device.

Hence, in some cases the video game asset information for enabling access to one or more video game assets (such as one or more in-game weapons for a video game) may further comprise time information specifying one or more time-based conditions for limiting an amount of time for which one or more of the video game assets are available for use by the video game processing device. For example, the portable user device and the second device may communicate via NFC to allow the video game asset information to be communicated for use by the video game processing device so that a particular game character and/or weapon can be temporarily used (e.g. for overcoming a task in a game), and subsequently access to one or more of the video game asset(s) can be automatically stopped without requiring further input from the user.

In some embodiments of the disclosure, the portable user device is configured to acquire at least some of the user profile information from one or more other processing devices previously used by the user. At least some of the user profile information may be received via one or more of a wired and/or wireless communication with another of the user's devices. In particular, another user device such as a personal computer or a video game console (e.g. PS5) may communicate information to the portable user device. Hence, one or more graphical user interfaces associated with a video game console may be used to allow the user to input user profile information to build a profile on their video game console. User profile information input to a video game console can thus be acquired by the portable user device (as explained previously this may be achieved using NFC between the two devices and/or a wired and/or other wireless communication). Alternatively or in addition, video game assets that have been unlocked and/or purchased by the user using their video game console (e.g. when logged into an account on the video game console) can be received by the portable user device and stored as part of the user profile information.

Optionally, the software application on the portable user device may be associated with another software application installed on another of the user's devices (e.g. a video game console typically used when the user is at home). For example, the software application on the portable user device may be a companion application for the another software application installed on another of the user's devices, such that information input to one of the applications can be automatically shared with the other application. In some examples, the user may have a user account for the software application on the portable user device and also have a user account for the another software application installed on another of the user's devices. The two user accounts be associated (e.g. synched or otherwise linked) with each other so that information can be shared between the accounts (e.g. via one or more servers connecting the portable user device to the another device). Therefore, user profile information (e.g. one or more settings) input by the user using one or more of their other devices can potentially be provided to the portable user device. This represents another possible example by which user profile information can be obtained by the portable user device.

Figure 6 is a schematic flowchart illustrating a computer-implement method comprising:
communicating (at a step 610), by a portable user device (e.g. 210) storing user profile associated with a user, at least some of the user profile information to a second device via near-field communication, the second device being one selected from a video game processing device (230) and one or more input devices (240) of an entertainment system (220); and
performing (at a step 620), by the video game processing device, one or more processing operations in dependence on at least some of the user profile information received from the portable user device.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.
Example(s) of the present technique are defined by the following numbered clauses:
1. A system comprising:
   a portable user device configured to store user profile information associated with a user; and
   an entertainment system comprising a video game processing device and one or more input devices,
   the portable user device being configured to communicate at least some of the user profile information to a second device via near-field communication, wherein the second device is one or more selected from the video game processing device and one or more of the input devices;
   wherein the video game processing device is configured to perform one or more processing operations in dependence on at least some of the user profile information received from the portable user device.
2. The system according to clause 1, wherein the user profile information is indicative of one or more user specified settings.
3. The system according to clause 2, wherein the user profile information is indicative of one or more control input mappings specified by the user for one or more input devices.
4. The system according to clause 3, wherein the user profile information is indicative of two or more different control input mappings specified by the user for a same input device, each of the two or more different control input mappings being associated with a different video game.
5. The system according to clause 3 or clause 4, wherein in response to receiving user profile information indicative of at least one control input mapping, the videogame processing device is configured to perform one or more processing operations using the at least one control input mapping instead of another control input mapping stored by the videogame processing device.
6. The system according to any one of clauses 2 to 5, wherein the user profile information is indicative of one or more user specified settings comprising one or more from the list consisting of:
   one or more display settings;
   one or more audio settings; and
   one or more graphical user interface settings.
7. The system according to any preceding clause, wherein the user profile information is indicative of one or more login credentials for accessing an account associated with a software application on the video game processing device.
8. The system according to any preceding clause, wherein the portable user device is configured to store a software application comprising the user profile information.
9. The system according to clause 8, wherein the portable user device comprises a display to display one or more graphical user interfaces associated with the software application for receiving one or more user inputs indicative of at least some of the user profile information associated with the user.
10. The system according to clause 8 or clause 9, wherein the portable user device is configured to display one or more graphical user interfaces associated with the software application for receiving one or more user inputs indicative of one or more selected portions of the user profile information to be made available for being communicated by the portable user device using near field communication.
11. The system according to any preceding clause, wherein the user profile information comprises video game asset information for enabling access to one or more video game assets associated with one or more video games, and wherein the portable device is configured to communicate at least some of the video game asset information to the second device via near field communication to enable access to one or more of the video game assets by the video game processing device.
12. The system according to clause 11, wherein the portable user device is configured to communicate at least some of the video game asset information to the second device in response to selection input by the user of a temporary share mode to enable a time-limited access to one or more of the video game assets by the video game processing device.
13. The system according to any preceding clause, wherein the portable user device is configured to acquire at least some of the user profile information from one or more other processing devices previously used by the user.
14. The system according to any preceding clause, wherein the portable user device is one selected from the list consisting of:
   a smartphone device;
   a smartwatch device; and
   a tablet computing device.
15. A computer-implemented method comprising:
   communicating, by a portable user device storing user profile associated with a user, at least some of the user profile information to a second device via near-field communication, the second device being one selected from a video game processing device and one or more input devices of an entertainment system; and
   performing, by the video game processing device, one or more processing operations in dependence on at least some of the user profile information received from the portable user device.
16. Computer software which when executed by a computer causes the computer to perform the method according to clause 15.

## Claims

1. A system comprising:
a portable user device configured to store user profile information associated with a user; and
an entertainment system comprising a video game processing device and one or more input devices,
the portable user device being configured to communicate at least some of the user profile information to a second device via near-field communication, wherein the second device is one or more selected from the video game processing device and one or more of the input devices;
wherein the video game processing device is configured to perform one or more processing operations in dependence on at least some of the user profile information received from the portable user device.

2. The system according to claim 1, wherein the user profile information is indicative of one or more user specified settings.

3. The system according to claim 2, wherein the user profile information is indicative of one or more control input mappings specified by the user for one or more input devices.

4. The system according to claim 3, wherein the user profile information is indicative of two or more different control input mappings specified by the user for a same input device, each of the two or more different control input mappings being associated with a different video game.

5. The system according to claim 3 or claim 4, wherein in response to receiving user profile information indicative of at least one control input mapping, the videogame processing device is configured to perform one or more processing operations using the at least one control input mapping instead of another control input mapping stored by the videogame processing device.

6. The system according to any one of claims 2 to 5, wherein the user profile information is indicative of one or more user specified settings comprising one or more from the list consisting of:
one or more display settings;
one or more audio settings; and
one or more graphical user interface settings.

7. The system according to any preceding claim, wherein the user profile information is indicative of one or more login credentials for accessing an account associated with a software application on the video game processing device.

8. The system according to any preceding claim, wherein the portable user device is configured to store a software application comprising the user profile information.

9. The system according to claim 8, wherein the portable user device comprises a display to display one or more graphical user interfaces associated with the software application for receiving one or more user inputs indicative of at least some of the user profile information associated with the user.

10. The system according to claim 8 or claim 9, wherein the portable user device is configured to display one or more graphical user interfaces associated with the software application for receiving one or more user inputs indicative of one or more selected portions of the user profile information to be made available for being communicated by the portable user device using near field communication.

11. The system according to any preceding claim, wherein the user profile information comprises video game asset information for enabling access to one or more video game assets associated with one or more video games, and wherein the portable device is configured to communicate at least some of the video game asset information to the second device via near field communication to enable access to one or more of the video game assets by the video game processing device.

12. The system according to claim 11, wherein the portable user device is configured to communicate at least some of the video game asset information to the second device in response to selection input by the user of a temporary share mode to enable a time-limited access to one or more of the video game assets by the video game processing device.

13. The system according to any preceding claim, wherein the portable user device is configured to acquire at least some of the user profile information from one or more other processing devices previously used by the user.

14. A computer-implemented method comprising:
communicating, by a portable user device storing user profile associated with a user, at least some of the user profile information to a second device via near-field communication, the second device being one selected from a video game processing device and one or more input devices of an entertainment system; and
performing, by the video game processing device, one or more processing operations in dependence on at least some of the user profile information received from the portable user device.

15. Computer software which when executed by a computer causes the computer to perform the method according to claim 14.
